# EUROPEAN PATENT APPLICATION

(11) **EP 3 203 154 A1**
(43) Date of publication of application: **09.08.2017**
(21) Application number: 16200983.1
(22) Date of filing: 28.11.2016
(51) Int. Cl.: F24D 3/08, F24D 5/12, F24D 11/02, F24D 17/02

(54) **DOMESTIC HOT WATER HEATING SYSTEM IN BUILDINGS UTILIZING A CENTRAL HEATING SYSTEM AS A HEAT SOURCE**

(30) Priority: 04.02.2016 SI 201600036
(71) Applicant: Kronovsek, Bogdan, 3314 Braslovce (SI)
(72) Inventor: Kronovsek, Bogdan, 3314 Braslovce (SI)
(74) Representative: Grünecker Patent- und Rechtsanwälte PartG mbB

(57) **Abstract**

A domestic hot water heating system in buildings utilizing a central heating system as a heat source, according to the invention, is feasible in local and centralized execution. A local execution of domestic hot water heating is based on an installation of a compact domestic hot water heat pump (1) or separated domestic hot water heat pump (2) into individual apartments from (A1) to (An), which are, via water inlets (15, 16, 17, 18) or (15,16, 20, 21) and via water outlets (28, 27, 25) or (25, 26) flow connected with a DHW tank (5) of the central heating system. A centralized execution of domestic hot water heating is based on a common separated booster heat pump (3) or the compact domestic hot water heat pump (1) located in the bottom or basement floor of the building and flow connected via water inlets (38, 37) and via water outlet (43) with the DHW tank (5) of the central heating system.

## Description

### The subject of the invention

The subject of the invention is a domestic hot water heating system in buildings utilizing a central heating system as a heat source and, to be more specific, a domestic hot water heating system primarily in apartment buildings, which for heating utilizes low-temperature water depended central heating systems, whereby the execution of the system can be based on a local or centralised mode of preparation of domestic hot water.

### Technical problem

The technical problem solved by this invention is such an execution of domestic hot water heating system that will make it possible to utilize the heat energy of the central heating system of buildings for this purpose and that will enable its integration into new buildings and also an addition to existing central heating systems, whereby the efficiency of the primary energy will be between 100% and 150%, depending on the execution of the central heating source and its utilization of renewable energy sources. In the case of a local, as well as in the case of centralized mode of domestic hot water heating, the water constantly circulates; consequently, the said execution of domestic hot water heating system will enable its much greater efficiency, without heat losses in the pipings of heated hot water. The system according to this invention will enable heating of domestic hot water in the heating season; in addition to this, it will enable cooling outside the heating season. As a result, the efficiency of the system according to the invention will be double. To heat the domestic hot water to the temperature of 65°C, the water in the boiler or DHW tank will be changed at least once a day, because of which the development of and the infection with legionella bacteria will be practically impossible. Furthermore, owing to the option of setting up the desired domestic hot water temperature, the use of the system will increase the comfort of apartment occupiers. At the same time, it will be easy to install the domestic hot water heating system, and to connect it to the central heating system in individual housing units in case of local system execution, and in case of centralized system execution in the lower part of a residential building; also, it will be easy to use it and very little space will be required for building it in.

### Current state of the art

Several domestic hot water heating systems are known. Local water heating with electrical boilers is among older systems. Furthermore, a central domestic hot water heating system with water piping to every apartment in a building, based on permanent hot water circulation, is known. In addition, local domestic hot water heating with domestic hot water heat pumps air/water, utilizing the warmth of the air inside or outside the building, is known. Also, a system of simultaneous water heating for central heating and for domestic hot water heating by means of a hot-water boiler is known, using any fuel, with a part of heated water being taken to the boiler and then further, through the pipe as domestic hot water, whereas the other, larger, part travels through the central heating pipes and through heating elements, i.e. radiators. The aforementioned known solutions have many weaknesses and deficiencies, e.g. the occurrence of legionella bacteria and large heat losses at the central domestic hot water piping and also problems concerning the distribution of costs of water heating and of using domestic hot water by housing units.

Furthermore, weakness and deficiency of the known solutions is also in the fact that, due to their low efficiency and their large consumption of electric energy, classical electric boilers are not in compliance with the new European directive on energy efficiency and, consequently, they are not recommended.

Furthermore, their weakness and deficiency is in the fact that the technology of building new objects, i.e. new buildings, and the renovation of the existing ones are based on low-temperature heating systems (between 30°C and 50°C), which does not suffice for local domestic hot water heating. As a result, the problem of domestic hot water heating remains open and unsolved.

Another weakness and deficiency of the known solutions of domestic hot water heating in apartments with smaller domestic hot water heat pumps air/water is in the fact that in case of using the warmth of the air in apartments and bathrooms, the entire energy balance is brought into question as in such a case, there is no utilizing of renewable sources by preparing domestic hot water. The use of external air as a heat source of a domestic hot water heat pump is connected with the problem of making large openings for air channels on the building facade, which is often not allowed in relation to most apartment buildings; similarly, it is also not allowed to fix air-conditioning appliances on facade walls. This type of heat pumps produces relatively a lot of noise due to the ventilator operation, which cannot be disregarded and is often disturbing for other apartment occupiers.

Furthermore, according to patent document CN203595176, a solution of vertical hot water piping distribution for central heating in an apartment building, using a heat pump in a circulating system, is known. It is characterised in that it takes heat from the sewerage system, which is located under or near the building. The heat acquired in this way represents a heat source at the primary side of the central heating system. Each apartment is equipped with its own heat pump and a circulating pump. As said, the heat pump as a heat source uses and utilizes the heat from the circulating system, which takes heat from the sewerage system and keeps the relevant apartments warm in this way. The circulating pump pushes heated liquid, water or some other suitable liquid, through pipes within the circulating system. Weakness and deficiency of this solution is in the fact that it is not intended for heating domestic hot water and that it is very complicated to utilize heat from the sewage system. Its weakness and deficiency is also in the fact that it can be used only in cases when the underground sewage system is located under or in immediate vicinity of buildings, and not otherwise.

The described technical problem will be resolved with the domestic hot water heating system in buildings according to the invention utilizing a central heating system as a heat source, and it can be of a local or centralized execution, with a compact and/or separated domestic hot water heat pump.

### Description of the invention and the method for its use

Below, the domestic hot water heating system in buildings according to the invention, whose basic heat source is a central heating system, will be more precisely described in relation to two feasibility examples and figures, which show as follows:

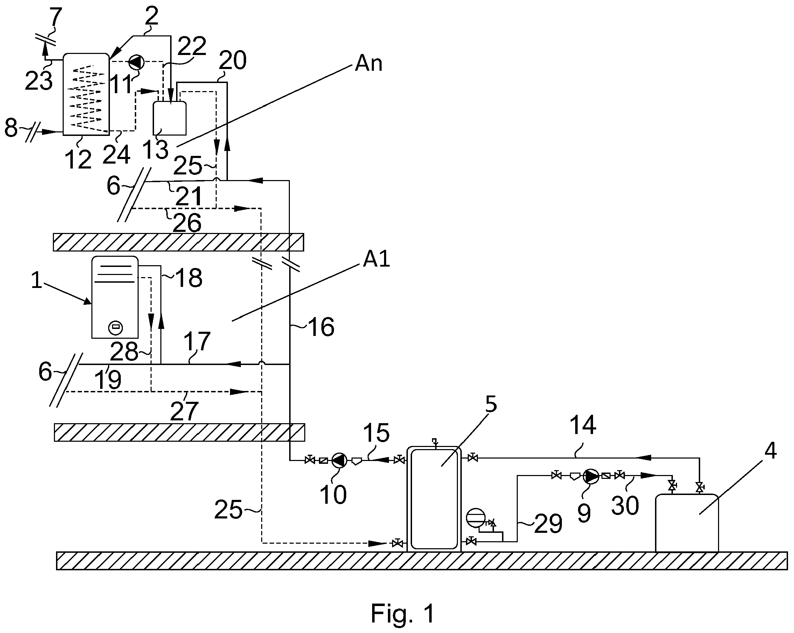

- Fig. 1: domestic hot water heating system in buildings according to the first feasibility example based on the local system execution utilizing the central heating system as a heat source, in relation to which each apartment is equipped with its own compact or separated domestic hot water heat pump, in schematic overview

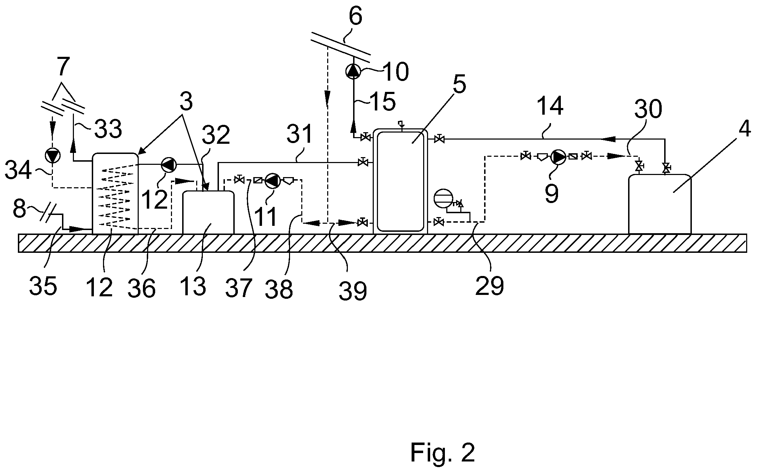

- Fig. 2: domestic hot water heating system in buildings according to the second feasibility example based on the centralized system execution also utilizing the central heating system as a heat source, with the central, i.e. common domestic hot water heat pump being located, as a rule, in the in the bottom or basement floor of an apartment building, in schematic overview.

Reference numerals in the figures represent as follows:
- 1-: compact domestic hot water heat pump
- 2-: separated domestic hot water heat pump
- 3-: separated booster heat pump
- 4-: heat pump
- 5-: DHW tank
- 6-: water piping
- 7-: water piping
- 8-: pipe system
- 9-: circulating pump
- 10-: circulating pump
- 11-: circulating pump
- 12-: buffer tank
- 13-: aggregate
- 14 to 23-: water inlet
- 24 to 30-: water outlet
- 31-: circulating pump
- 32 to 33-: water inlet
- 34-: water outlet
- 35-: water inlet
- 36-: water outlet
- 37 and 38-: water inlet
- 39-: water outlet
- 40-: circulating pump
- 41-: circulating pump
- 42-: circulating pump
- 43-: water outlet
- A1-: apartment No. 1
- An-: apartment No. n

Fig.1 shows the first feasibility example of a domestic hot water heating system in buildings utilizing a central heating system as a heat source based on a local execution, with every apartment A1 to An being equipped with a corresponding compact domestic hot water heat pump 1 or with a separated domestic hot water heat pump 2.

A central heating system in an apartment building is of standard execution. It consists of a heat pump 4 according to the system water/water or air/water, which heats water and pushes it through the water inlet 14 into the DHW tank 5. From the DHW tank 5, the heated water travels through the water inlet 15 into the circulating pump 10 and then further through the water inlet 16 and via branches into individual living quarters. In the shown feasibility example, the water inlet 17 and water inlet 21 supply the heating bodies in the apartments A1 to An with the heated water via water piping 6.

The water inlet 17 is connected with the water piping 6 of the heating system, and also, via the water inlet 18, with the compact domestic hot water heat pump 1 in apartment A1, wherein the compact domestic hot water heat pump 1 consists of an appropriate aggregate and a DHW tank, which are integrated within the same housing and as such, they are not specially indicated.

In some other apartment An, the water inlet 21 is connected with the corresponding water piping 6 of the heating system; at the same time it is connected, via water inlet 20, with the separated domestic hot water heat pump 2. The separated domestic hot water heat pump 2 consists of an aggregate 13 and a buffer tank 12, which are constructed as two independent separate units being connected on the inlet side, with the water inlet 22 including the intermediate circulating pump 11. From the buffer tank 12, there runs the water inlet 23 through which domestic hot water runs to the water piping 7 and then to the domestic water users. Cold domestic water runs through the water inlet 35 from the water pipe system 8 to the buffer tank 12. This by analogy applies also for all other apartments An in the building, whereas for all apartments from A1 to An, there is an alternative concerning the selection of the compact domestic hot water heat pump 1 or the separated domestic hot water heat pump 2.

In apartment A1, the water outlet 28 of cooled heating water runs from the compact domestic hot water heat pump 1. The water outlet 28 is connected to the water inlet 19, which runs from the water piping 6 of the central heating system. The cooled domestic water then returns through the water outlets 27 and 25 into the central heating system, via the DHW tank 5, water outlet 29, circulating pump 9 and water outlet 30 into the heat pump 4.

In apartment An, cooled domestic water runs from the buffer tank 12 of the separated domestic hot water heat pump 2 via the water outlet 24, through the separated aggregate 13 and via the water outlets 25 and 26 to the DHW tank 5 of the central heating system and then through the water outlet 29 via the circulating pump 9 and water outlet 30 back to the heat pump 4.

It applies for the previously described first feasibility example of the invention according to Fig. 1 that the heat pump 4 and the DHW tank 5 with the corresponding circulating pumps 9 and 10 are the component parts of the central heating system in apartment buildings, whereas the compact domestic hot water heat pump 1 and/or the separated domestic hot water heat pump 2 with the circulating pump 11 represent a domestic hot water heating system connected with the central heating system.

Throughout the year, in apartment buildings, in apartments from A1 to An, the temperature of the water in the central heating system with the installed heat pump 4 fluctuates between 20° and 35°C or even up to 55°C. When cooling down the rooms, the temperature fluctuates between 7° and 25°C, which is not sufficient for additional heating of domestic water. Consequently, in apartments A1 to An, the compact domestic hot water heat pump 1 or the separated domestic hot water heat pump 2 is installed, whereby they heat up the domestic hot water to the temperature between 50° and 80°C. The compact domestic hot water heat pump 1 or the separated domestic hot water heat pump 2 heats up the domestic hot water by cooling down the water from the central heating system and then with the taken away heat, it heats up the domestic hot water to the desired temperature. This is characteristic for the first feasibility example from Fig. 1 and also for the separated booster heat pump 3 in the second feasibility example shown in Fig. 2, the description of which follows below.

Fig. 2 shows the second feasibility example of the domestic hot water heating system in buildings utilizing a central heating system as a heat source. It is based on the centralised execution, for which it is characteristic that for all apartments A1 to An in an apartment building, one common separated booster heat pump 3 is used, which is located in the bottom or basement floor of the building and consists of the aggregate 13 and the buffer tank 12, which are separate units. In some other feasibility example, which is not shown, in the centralised execution, the compact domestic hot water heat pump 1, which is shown in apartment A1 in Fig. 1 in the local execution of the invention, can be used instead of the separated booster heat pump 3.

Also in this second feasibility example, the central heating system in an apartment building is of standard execution and it also consists of the heat pump 4 according to the system earth/water or air/water, which heats the water and brings it through the water inlet 14 to the DHW tank 5. The heated water travels from the DHW tank 5 through the water inlet 15 to the circulating pump 42 and then via the water piping 6 to the heating bodies in individual apartments A1 to An, which are not shown in Fig. 2. From the heating bodies, the cooled water returns via the water outlet 39 into the DHW tank 5 and then through the water outlet 29, via the circulating pump 9 and the water outlet 30 back to the heat pump 4 of the central heating system.

In this execution of the invention, the hot water from the DHW tank 5 of the central heating system runs through the water inlet 38 and via the circulating pump 41 and through the water inlet 37 to the aggregate 13 of the separated booster heat pump 3, from which the heated water is brought through the water inlet 32 and via the circulating pump 40 to its buffer tank 12. From the buffer tank 12, hot domestic water is brought through the water inlet 33 to the water piping 7 and further to the water fittings in individual housing units. Cold domestic water flows into the buffer tank 12 from the water pipe system 8 through the water inlet 35.

In individual housing units, i.e. apartments A1 to An, not shown in Fig. 2, in case of circulation, the cooled domestic water can return via the water piping 7 to the buffer tank 12 through the water outlet 34 with the circulating pump 31. The cooled domestic water flows from the buffer tank 12 through the water outlet 36 into the aggregate 13. At the primary side, the cooled domestic water then flows from the aggregate 13 through the water outlet 43 into the DHW tank 5 of the central heating system. From the DHW tank 5, the cooled domestic water together with the cooled water from the central heating system returns through the water outlets 29 and 30 and through the intermediate circulating pump 9 to the heat pump 4.

In some other feasibility example, the heat pump 4 in the central heating system can be replaced with some other water heating device, e.g. with a hot-water boiler, which has no impact upon one or the other execution of domestic water heating by means of central heating.

The second feasibility example of the invention, shown in Fig. 2, differs from the first feasibility example, shown in Fig. 1, in the fact that instead of the local installation of the compact domestic hot water heat pump 1 or the separated domestic hot water heat pump 2 in each apartment A1 to An separately, the centralized domestic hot water heating system with the separated booster heat pump 3 is used, whereby both executions utilize the central heating system in buildings as a heat source. The volume and the capacity of the aggregate 13 and of the buffer tank 12 of the separated booster heat pump 3 are a bit larger to suffice for the operation of the described centralized domestic hot water heating system. As previously said, also the compact domestic hot water heat pump 1 can be used.

That the domestic hot water heating system according to the invention can be feasible, the DHW tank 5 must be constructed in such a way that the water inlet 15 for the purpose of central heating, and simultaneously the water inlet 38 for the purpose of domestic hot water heating utilizing the central heating system as a heat source, lead out of it.

According to the procedure previously described for the first feasibility example, the separated booster heat pump 3 cools down the warm water from the central heating system in the aggregate 13 and with thus acquired heat, it heats the domestic hot water and brings it into the buffer tank 12 and further to the water fittings in all the storeys of the building according to the previously described procedure.

It is a fact that the centralized execution of heating domestic hot water within the central heating system requires a buffer tank 12 and an aggregate 13 of the separated booster heat pump 3 to be of larger dimensions and larger capacity. As a rule, the dimension and the capacity of both units is the sum of all the local compact domestic hot water heat pumps 1 and/or the separated domestic hot water heat pumps 2 that would be installed in individual apartments A1 to An in case of the local execution of the domestic hot water heating system.

There are many advantages of local and/or centralized executions of the domestic hot water heating system in buildings according to this invention utilizing a central heating system as a heat source. Heat losses in water pipings are minimal, consequently a significantly higher efficiency of domestic hot water heating is achieved. As domestic hot water reaches the temperature of 65°C or more and as the water in the buffer tank 12 is changed at least once a day, there is practically no possibility of the development of and the infection with legionella bacteria. Furthermore, a greater comfort of apartment occupiers and their selection of setting the desired temperature of domestic water are further advantages. The operation of the domestic hot water heat pumps 1 and/or 2 and/or booster heat pumps 3 is extremely silent when heating domestic hot water. The efficiency of primary energy when heating domestic hot water is between 100% and 150%, which directly depends on the central heating system and its utilization of renewable energy sources. The simple construction and installation of one or the other domestic hot water heating system in buildings are further advantages; it can be connected with the central heating system in buildings and it can be used with the existing as well as new central heating systems.

## Claims

1. The domestic hot water heating system in buildings utilizing a central heating system as a heat source, a central heating system comprising a heat pump (4) and a DHW tank (5) being connected with each other with a water inlet (14) and water outlets (29, 30) with an intermediate circulating pump (9), whereby a water inlet (15) or water inlet (16) with a circulating pump (10) and circulating pump (42), respectively, runs from the DHW tank (5) to a water piping (6), **is characterised by the fact** that, in the first local feasibility example, at least one compact domestic hot water heat pump (1), in which an aggregate and a buffer tank, not shown, are built into a common housing, is connected to a water inlet (16) of a central heating system via water inlets (17, 18), or at least one separated domestic hot water heat pump (2), consisting of at least one aggregate (13) and of at least one buffer tank (12) as separate units, is connected to the water inlet (16) of the central heating system with a water inlet (20); that, in the second centralised feasibility example, at least one separated booster heat pump (3), consisting of an aggregate (13) and a buffer tank (12) as separate units, is connected to a DHW tank (5) of the central heating system with the water inlets (38, 37) and an intermediate circulating pump (41).

2. The domestic hot water heating system according to Claim 1 **is characterised by the fact** that the aggregate (13) and the buffer tank (12) of the separated domestic hot water heat pump (2) are connected with each other via water inlet (22) including an intermediate circulating pump (11) and via water outlet (24).

3. The domestic hot water heating system according to Claim 1 **is characterised by the fact** that the compact domestic hot water heat pump (1) is connected with the DHW tank (5) of the central heating system via the return water outlets (28, 27, 25).

4. The domestic hot water heating system according to Claim 1 or 2 is **characterised by the fact** that on the buffer tank (12) of the separated domestic hot water heat pump (2), there are formed a water inlet (23) to a water piping (7) and a water pipe system (8) connection.

5. The domestic hot water heating system according to Claim 1 or 2 is **characterised by the fact** that the aggregate (13) of the separated domestic hot water heat pump (2) is connected with the DHW tank (5) of the central heating system via water outlet (25).

6. The domestic hot water heating system according to Claim 1 is **characterised by the fact** that the compact domestic hot water heat pump (1) or the separated domestic hot water heat pump (2) is built into individual apartments (A1) to (An).

7. The domestic hot water heating system according to Claim 1 **is characterised by the fact** that the aggregate (13) and the buffer tank (12) of the separated booster heat pump (3) are connected with each other with a water inlet (32) including an intermediate circulating pump (40) and with a water outlet (36).

8. The domestic hot water heating system according to Claim 1 or 7 **is characterised by the fact** that the buffer tank (12) of the separated booster heat pump (3) is connected with the water piping (7) via water inlet (33) and via water outlet (34) including an intermediate circulating pump (31).

9. The domestic hot water heating system according to Claim 1 or 8 **is characterised by the fact** that the buffer tank (12) of the separated booster heat pump (3) is connected with a water pipe system (8).

10. The domestic hot water heating system according to Claim 1 **is characterised by the fact** that the aggregate (13) of the separated booster heat pump (3) with the DHW tank (5) of the central heating system is connected with a water outlet (43).

11. The domestic hot water heating system according to Claim 1 **is characterised by the fact** that the compact domestic hot water heat pump (1) is also used in a centralized execution of said system.
